# EUROPÄISCHE PATENTANMELDUNG

(11) **EP 1 492 222 A2**
(43) Veröffentlichungstag der Anmeldung: **29.12.2004**
(21) Anmeldenummer: 04102935.6
(22) Anmeldetag: 24.06.2004
(51) Int. Cl.: H02P 9/00

(54) **Verfahren und Vorrichtung zum Erfassen eines Lastabwurfes zwischen einer elektrische Energie erzeugenden Rotationsmaschine und einem zur Stromversorgung an die Rotationsmaschine angeschlossenen Versorgungsnetzwerkes**

(30) Priorität: 27.06.2003 DE 10328932
(71) Anmelder: Alstom Technology Ltd, 5400 Baden (CH)
(72) Erfinder: Schütte, Thomas, 5300, Turgi (CH)

(57) **Zusammenfassung**

Beschrieben wird ein Verfahren sowie eine Vorrichtung zum Erfassen eines Lastabwurfes zwischen einer elektrische Energie erzeugenden Rotationsmaschine und einem zur Stromversorgung an die Rotationsmaschine angeschlossenen Netzwerkes, an das die Rotationsmaschine in Abhängigkeit ihrer Rotationsgeschwindigkeit eine Wechselfrequenz beaufschlagte elektrische Spannung abgibt.

Die Erfindung zeichnet sich durch folgende Verfahrensschritte aus:
- Erfassen einer von der Rotationsgeschwindigkeit der Rotationsmaschine abhängigen ersten Betriebsgröße,
- Erfassen einer vom Trägheitsmoment der Rotationsmaschine abhängigen zweiten Betriebsgröße und
- Vergleichen der ersten Betriebsgrößen mit einem ersten Referenzwert sowie Vergleichen der zweiten Betriebsgröße mit einem zweiten Referenzwert und bei Überschreiten beider Betriebsgrößen jeweils einer vorgebbaren Toleranzgrenze erfolgt ein Generieren eines Signals.

## Beschreibung

### Technisches Gebiet

Die Erfindung bezieht sich auf ein Verfahren sowie eine Vorrichtung zum Erfassen eines Lastabwurfes zwischen einer elektrische Energie erzeugenden Rotationsmaschine und einem zur Stromversorgung an die Rotationsmaschine angeschlossenen Netzwerkes, an das die Rotationsmaschine in Abhängigkeit ihrer Rotationsgeschwindigkeit eine Wechselfrequenz beaufschlagte elektrische Spannung abgibt.

### Stand der Technik

Elektrische Energiekraftwerke speisen in der Regel bedarfsgerecht elektrische Energie in ein Versorgungsnetz ein, indem das Kraftwerk Wechselspannung mit einer vom Netzbetreiber vorgegebenen Wechselfrequenz bereitstellt, die dem jeweiligen Versorgungsnetz zugeführt eingespeist wird. Im normalen Kraftwerksbetrieb korrespondiert die vom Kraftwerk erzeugte und abgegebene elektrische Leistung mit der über das Versorgungsnetz abgefragten Last, so dass die zur Energieerzeugung erforderliche Rotationsmaschine, in Form eines Generators bzw. Generatoranordnungen, mit einer weitgehend konstanten Rotationsgeschwindigkeit, die direkt proportional zur Frequenz der erzeugten Wechselspannung ist, betreibbar ist.

Treten jedoch netzseitige Änderungen in der abgefragten Last auf, die vielseitige Ursachen haben können, so wirken sich diese unmittelbar auf das Betriebsverhalten der die elektrische Energie erzeugenden Rotationsmaschine sowie auch auf die hierfür erforderlichen Antriebsaggregate innerhalb der Kraftwerksanlage aus, die es gilt zum Zwecke einer bedarfsorientierten elektrischen Energieerzeugung aktiv nachzuregeln.

Tritt bspw. der Fall auf, dass die netzseitige Lastabfrage abrupt von einem Nominalwert auf einen geringeren Lastwert abfällt, der nicht notwendigerweise Null sein muss, so spricht man in diesem Fall von einem "Lastabwurf", der im Extremfall einer abrupten vollständigen Trennung zwischen der Generatoreinheit eines Kraftwerkes und dem entsprechend mit elektrischer Energie zu versorgenden Netzwerkes, mit dem eine Vielzahl von Endverbrauchern verbunden sind, entspricht. In einem derartigen Extremfall, in dem die netzseitige Lastabfrage während des Normalbetriebes eines elektrischen Kraftwerkes, bspw. eines Gasturbinenkraftwerkes abrupt auf Null, oder nahezu Null, abfällt, werden systembedingt alle rotierenden Anlagenkomponenten, allen voran die Gasturbinenund Generatorkomponenten beschleunigt, da nach dem Lastabwurf die der Welle weiterhin zugeführte Rotationsenergie nicht mehr in elektrische Energie umgewandelt werden kann, sondern nun in Form von Beschleunigungsenergie in die rotierenden Anlagenkomponenten umgesetzt wird. Erfolgt im Falle eines Lastabwurfes keine unverzügliche Antriebsreduzierung der Rotationsmaschinen, so würden aufgrund der fortwährend wirkenden Beschleunigung konstruktionsbedingt vorgegebene Betriebsgrenzen der Rotationsmaschinen erreicht und überschritten werden, weswegen die gesamte Kraftwerksanlage zur Vermeidung von Schäden vollständig abgeschaltet wird. Tritt dieser Fall ein, so steht die Anlage für einen größeren Zeitraum für eine erneute Energieeinspeisung in das Versorgungsnetzwerk nicht zur Verfügung, zumal die Kraftwerksanlage erneut gestartet, hochgefahren und überdies mit der Netzfrequenz innerhalb des Versorgungsnetzes synchronisiert werden müsste. Dies umfasst jedoch zeitintensive Massnahmen, die zu erheblichen wirtschaftlichen Einbussen führen.

Um einerseits ein durch Lastabwurf bedingtes Überschreiten von Betriebsgrenzen jeweiliger Anlagenkomponenten zu vermeiden und andererseits den Fall einer vollständigen Notabschaltung des gesamten Kraftwerkes weitgehend zu vermeiden, sehen an sich bekannte Maßnahmen die Messung und Überwachung der Rotationsgeschwindigkeit der in einer Kraftwerksanlage enthaltenen Rotationsmaschinen vor. Hierzu dienen am Schaft der jeweiligen Rotationsmaschinen befestigte Geschwindigkeitssensoren, deren Messsignale in einer Kontroll- und Steuereinheit überwacht werden, die im Falle eines Überschreitens einer vorgegebenen Maximalgeschwindigkeit ein Steuersignal zum Abschalten der Gasturbinenanlage generiert.

Gleichsam der vorstehend genannten Überwachung der Rotationsgeschwindigkeit der jeweiligen Anlagenkomponenten ist es ebenso geeignet und bekannt, die Frequenz der vom Generator erzeugten Wechselspannung zu messen und zu überwachen, zumal die Frequenz direkt proportional mit der Rotationsgeschwindigkeit des Generators ist und somit ebenso im Falle eines Überschreitens einer Maximalfrequenz als Indiz für eine unmittelbar bevorstehende Beschädigung bzw. Beeinträchtigung nicht nur der Kraftwerksanlage selbst sondern überdies auch aller mit der Kraftwerksanlage über das Versorgungsnetz verbundenen Endverbrauchern dient.

So sind Kraftwerksanlagen bekannt, in denen sowohl die Frequenz der erzeugten Wechselspannung als auch die Rotationsgeschwindigkeit der rotierenden Anlagenkomponenten, insbesondere der Generatoreinheit erfasst und überwacht werden. Mit Hilfe dieser redundanten Überwachungsmethode bezüglich der den rotierenden Anlagenkomponenten innewohnende Dynamik ist ein gegenwärtiger Sicherheitstandard gegeben, der als Absicherung gegen einen abrupt auftretenden Lastabwurf dient.

Alternativ zur vorstehenden Absicherung vor Schäden bedingt durch Lastabwurf erfolgt bei den meisten derzeit im Betrieb befindlichen Kraftwerken zur Erzeugung elektrischer Energie die Überwachung hinsichtlich eines Lastabwurfes durch Überprüfen bestimmter Hochspannungsanschlussverbindungen zwischen der Generatoreinheit und dem Versorgungsnetz, ob jeweilige Schalterverbindungen geschlossen oder geöffnet sind. Für den Fall, dass eine Hochspannungsverbindung durch eine entsprechend geöffnete Schalterstellung unterbrochen ist, wird ein entsprechendes Störungssignal erzeugt und an eine übergeordnete Überwachungseinheit abgegeben, die bspw. im Falle einer Gasturbinenanlage die für den Betrieb einer Gasturbinenanlage erforderliche Brennstoffzufuhr drosselt oder vollständig unterbindet. Aufgrund der überaus großen Vielzahl einzelner mit dem Versorgungsnetzwerk verbundenen Hochspannungsverbindungsleitungen ist jedoch eine Überwachung sämtlicher Verbindungsleitungen entweder nicht möglich oder nur mit einem überaus großen finanziellen Aufwand durchführbar.

Hinzu kommt das erschwerende Erfordernis, dass im Falle eines detektierten Lastabwurfes die Erzeugung eines entsprechenden Störsignals sowie dessen entsprechende Auswertung in weniger als typischerweise 500 msec., gerechnet vom tatsächlichen Eintreten des Lastabwurfes, zu erfolgen hat, sofern wirkungsvoll entsprechende Gegenmaßnahmen zur Vermeidung von Überschreitungen der Betriebsgrenzen sowie von Schädigungen an der Kraftwerksanlage selbst eingeleitet werden sollen.

### Darstellung der Erfindung

Der Erfindung liegt die Aufgabe zugrunde, ein Verfahren sowie eine Vorrichtung zum Erfassen eines Lastabwurfes zwischen einer elektrische Energie erzeugenden Rotationsmaschine und einem zur Stromversorgung an die Rotationsmaschine angeschlossenen Versorgungsnetzwerkes, an das die Rotationsmaschine in Abhängigkeit ihrer Rotationsgeschwindigkeit eine Wechselfrequenz beaufschlagte elektrische Spannung abgibt, derart weiterzubilden, dass die Zuverlässigkeit, mit der Lastabwürfe erkannt werden, verbessert bzw. gesteigert werden soll. Auf diese Weise soll erreicht werden, dass durch die gezielte Regelung der Kraftwerkskomponenten ein unnötiges Herunterfahren des Kraftwerkes wegen Überschreitens der maximal zulässigen Drehzahl vermieden werden kann.

Das erfindungsgemäße Verfahren ist Gegenstand des Patentanspruches 1. Eine das erfindungsgemäße Verfahren realisierbare Vorrichtung ist Gegenstand des Anspruches 12. Den Erfindungsgedanken vorteilhafte weiterbildende Merkmale sind Gegenstand der Unteransprüche sowie der weiteren Beschreibung unter Bezugnahme auf die Ausführungsbeispiele zu entnehmen.

Erfindungsgemäß zeichnet sich das Verfahren gemäß Oberbegriff des Anspruches 1 durch folgende Verfahrensschritte aus:
Als Beurteilungsgrundlage für das Auftreten eines Lastabwurfes wird sowohl eine von der Rotationsgeschwindigkeit der Rotationsmaschine abhängige erste Betriebsgröße als auch eine vom Trägheitsmoment der Rotationsmaschine abhängige zweite Betriebsgröße erfasst und ausgewertet. Letztere hängt vom Drehimpuls, d.h. von den in Rotation befindlichen Massen der Rotationsmaschine ab, die im Falle eines Lastabwurfes, wie eingangs erläutert, eine Beschleunigung erfahren, die sich letztlich in einer zeitlichen Änderung der Frequenz f der durch die Rotationsmaschine bzw. des Generators erzeugten Wechselspannung auswirkt.

Nach Erfassen der ersten und zweiten Betriebsgröße werden beide mit entsprechenden ersten und zweiten Referenzwerten verglichen und bei Überschreiten beider Betriebsgrößen jeweils einer vorgebbaren Toleranzgrenze ein Signal generiert, das unter Zugrundelegung bestimmter Auswertekriterien als Auslösesignal für ein das Betriebsverhalten der Rotationsmaschine beeinflussenden Regelprozess dient, der bei Vorliegen unkritischer Störungen bzgl. der netzseitig abgefragten Last eine das Betriebsverhalten der Rotationsmaschine stabilisierende Regelung vorsieht, oder im Falle eines tatsächlichen, vollständigen Lastabwurfes zum unverzüglichen Einleiten einer sofortigen Reduktion der Beschleunigungsenergie führt, damit eine Notausschaltung des Generators wegen Überschreiten der maximalen Drehzahl vermieden werden kann. Zum Erfassen und Überwachen der Rotationsgeschwindigkeit v der Rotationsmaschine bietet es sich grundsätzlich an, die Drehfrequenz der Rotationsmaschine mit Hilfe eines an der Rotationsachse der Rotationsmaschine angebrachten Sensors abzugreifen. Alternativ oder in Kombination ist die Rotationsgeschwindigkeit v der Rotationsmaschine durch Erfassen der Wechselfrequenz f der von der Rotationsmaschine abgegebenen elektrischen Spannung aufgrund der direkten Proportionalität zwischen Wechselfrequenz f und Rotationsgeschwindigkeit v möglich. Letztere Messmethode wird bevorzugt angewendet, da der hierzu üblicherweise erforderliche messtechnische Aufwand geringer ist als das Vorsehen einer Messsensoranordnung längs des Rotationsschaftes der Rotationsmaschine.

Zudem dient das Erfassen und Überwachen der Wechselfrequenz f der elektrischen Spannung in Bezug auf ihre zeitliche Änderung dem Erkennen von an den rotierenden Massen der Rotationsmaschine auftretenden Beschleunigungsmomenten, die erfindungsgemäß neben der Rotationsgeschwindigkeit v bzw. Wechselfrequenz f das zweite Indiz für das Vorliegen eines möglichen Lastabwurfs darstellen.

So zeigt sich, dass ein mit Hilfe einer Gasturbinenanlage angetriebener Generator zur Stromerzeugung im Nennlastbetrieb im Falle eines vollständigen Lastabwurfes typischerweise eine Beschleunigung erfährt, die sich in der Wechselfrequenz f mit einem zeitlichen Anstieg zwischen 3 - 4 Hz/sec. auswirkt. Dieser charakteristische Beschleunigungskoeffizient, der als sicheres Indiz für einen Lastabwurf herangezogen werden kann, rührt von der Rotationsenergie der Rotationsmaschine vor Eintreten des Lastabwurfes her, die pro Megawatt erzeugte Leistung investiert worden ist, d. h. im Falle eines Lastabwurfes wird die vor dem Lastabwurf abgegebene elektrische Leistung, die durch die Rotationsenergie der Gasturbinenanlage bereitgestellt wird, nach dem Lastabwurf zur Beschleunigung der eigenen rotierenden Massen der Rotationsmaschine eingesetzt.

Durch die numerische Größe des für Gasturbinenanlagen charakteristischen Beschleunigungswertes von 3 bis 4 Hz/sec bei Lastabwurf, eröffnet sich die Möglichkeit innerhalb einer ausreichend großen Zeitspanne nach Eintreten eines Lastabwurfes eine Anzahl von Messungen durchzuführen, durch die die zeitliche Veränderung der Rotationsgeschwindigkeit zuverlässig bestimmt werden kann, ohne Gefahr laufen zu müssen maximale Betriebsgrenzen der Gasturbinenanlage zu überschreiten.

Im Wege der Auswertung der durch eine Vielzahl von Messungen erhaltenen Messdaten betreffend das Beschleunigungsverhalten der Rotationsmaschine, können letztlich zuverlässige Aussagen über detektierte Störungen getroffen werden, die entweder auf einem tatsächlichen Lastabwurf oder lediglich auf kontrollierbare Betriebsstörungen innerhalb des Netzwerkes zurückzuführen sind. Letztere erfordern keineswegs ein vollständiges Herunterfahren der Rotationsmaschine, vielmehr können derartige Störungen durch entsprechende Regelungen bspw. im Rahmen der Brennstoffzuführung einer Gasturbinenanlage stabilisiert werden. Handelt es sich um andere Kraftwerkstypen bspw. um mit Dampf- oder Wasserkraftturbinen angetriebene Rotationsmaschinen zur elektrischen Energieerzeugung, so bedarf es bei derartigen Systemen um einen geregelten Eingriff in die Dampf- bzw. Wasserzuführung. Die beiden letztgenannten Kraftwerkstypen weisen im Unterschied zu einer Gasturbinenanlage ungleich geringere charakteristische Beschleunigungskoeffizienten auf, die sich im Falle eines Lastabwurfes auf das Beschleunigungsverhalten der rotierenden Anlagenkomponenten auswirken.

In einer bevorzugten Verfahrensvariante wird zur Überwachung der Rotationsgeschwindigkeit, die wie eingangs erwähnt, vorzugsweise über die Wechselfrequenz f der an das Versorgungsnetzwerk abgegebenen Wechselspannung erfasst wird, ein vorgebbarer Maximalwert fₘₐₓ gewählt, der von der in Betrieb befindlichen Rotationsmaschine abhängt und im weiteren als erster Referenzwert dient. Bleibt die gemessene Wechselfrequenz f unterhalb des vorgegebenen Referenzwertes fₘₐₓ, so befindet sich die Rotationsmaschine in einem zuverlässigen Betriebsstadium. Wird hingegen der maximal vorgegebene Referenzwert fₘₐₓ für eine definierte Zeit überschritten, so indiziert dies grundsätzlich das Vorliegen einer Störung, die anzeigt, dass für eine längere Zeitdauer innerhalb des Versorgungsnetzwerkes die Leistungsabgabe höher ist als die Leistungsaufnahme der angeschlossenen Verbraucher.

Würde dieses Kriterium in Alleinstellung maßgeblich für die Entscheidung über das Vorliegen eines Lastabwurfes sein, so käme es insbesondere in Ländern oder in Versorgungsnetzwerken mit instabilen Systemfrequenzen zu unnötigen Lastabwürfen und den damit verbundenen, kosten- und zeitaufwendigen Wiederinbetriebnahmen der Kraftwerksanlagen - ein Aufwand, den es mit dem erfindungsgemäßen Verfahren zu vermeiden gilt.

Aus diesem Grunde wird zeitgleich zur Überwachung der Rotationsgeschwindigkeit, wie vorstehend erläutert, die zeitliche Veränderung der an das Versorgungsnetz von der Rotationsmaschine abgegebenen elektrischen Wechselspannung erfasst und mit einem maximal zulässigen Beschleunigungswert δ*f* /*δt*ₘₐₓ verglichen. Bei Überschreiten des maximal vorgegebenen Beschleunigungswertes tritt der Fall ein, dass die bis zum Störungseintritt von der Gasturbinenanordnung erzeugte elektrische Leistung nun von den rotierenden Anlagenkomponenten selbst absorbiert wird, wodurch diese beschleunigt werden. Eine Leistungsabgabe an das externe Versorgungsnetz findet in diesem Moment nicht statt. Würde jedoch, auch wie im vorstehend geschilderten Fall, die Überwachung des Beschleunigungsverhaltens der Rotationsmaschine in Alleinstellung für die Beurteilung des Falles eines Lastabwurfes herangezogen werden, so käme es bei der Stromversorgung in Ländern mit instabilen Netzfrequenzen ebenso zu ungewollten Fehlauslösungen, die unnötiger Weise zum Abschalten der Kraftwerke führen würden. Insbesondere in Ländern mit Versorgungsnetzen, in denen die Netzfrequenz instabil ist, können durchaus im Versorgungsnetz auftretende Schwankungen als ein Lastabwurf-Szenario missinterpretiert werden mit den bereits erwähnten Konsequenzen. So ist es in den meisten Netzen üblich, als Maßnahme zur Stabilisierung der Netzfrequenz eine gestaffelte Zwangsabschaltung bestimmter Endnutzer durchzuführen, so dass kurzzeitig das Versorgungsnetz mit einem Überschuss an elektrischer Energie versorgt wird. Dies jedoch bedeutet, dass die nicht genutzte elektrische Energie in den weiteren Antrieb der Rotationsmaschine und damit verbunden zu einer Beschleunigung der rotierenden Massen der Rotationsmaschine einfließt und wenigstens kurzzeitig durchaus zu einem Überschreiten des vorgegebenen maximalen Beschleunigungswertes *δf* /*δt* ₘₐₓ führen könnte, obgleich die Rotationsgeschwindigkeit v, repräsentiert durch die Wechselfrequenz f, die vorgegebene Maximalfrequenz fₘₐₓ nicht übersteigt.

Für eine zuverlässige Detektion von tatsächlich vorliegenden Fällen von Lastabwurf ist es daher erforderlich, die Rotationsgeschwindigkeit v sowie das Beschleunigungsverhalten der Rotationsmaschine simultan zu überwachen und entsprechend mit den vorgebbaren Referenzwerten fₘₐₓ und *δf* /*δt* ₘₐₓ zu vergleichen. Ein tatsächlicher, durch das Versorgungsnetz initiierter Lastabwurf liegt ausschließlich im Falle vor, sofern die Rotationsgeschwindigkeit, repräsentiert durch die Wechselfrequenz f, die Maximalfrequenz fₘₐₓ übersteigt und zugleich die Rotationsmaschine sprich der Generator, mit einem Beschleunigungswert größer δ*f*/δ*t* ₘₐₓ beschleunigt wird. Die Kombination des Erfassens und Überwachens vorstehender Messgrößen führt zu einer zuverlässigen Diagnose von elektrische Energie erzeugenden Kraftwerksanlagen, vorzugsweise Gasturbinenanlagen, im Hinblick auf ein mögliches Auftreten von Lastabwürfen, bedingt durch Störungen innerhalb des Versorgungsnetzes.

In einer weiteren bevorzugten Ausführungsform des Verfahrens werden die Referenzwerte hinsichtlich der maximalen Wechselfrequenz fₘₐₓ sowie des maximalen Beschleunigungswertes δ*f* /δ*t* ₘₐₓ vom aktuellen Betriebsverhalten der Rotationsmaschine ermittelt und aktuelle bestimmt. So zeigt sich insbesondere bei dem Betrieb einer Gasturbinenanlage, dass die Rotationsmaschine unter Volllast im Falle eines Lastabwurfes eine Beschleunigung zwischen 3 und 4 Hz/sec. erfährt. Die tatsächlich auf die Rotationsmaschine einwirkende Beschleunigung hängt jedoch stets von der aktuell durch die Rotationsmaschine erzeugte elektrische Leistung ab, die abweichend vom Volllastbetrieb kleinere Werte annehmen kann. Um jedoch auch zuverlässige Analysen hinsichtlich des Auftretens von Lastabwürfen bei geringeren Leistungszuständen der Kraftwerksanlage insbesondere der Rotationsmaschine durchführen zu können, ist es vorteilhaft, den maximalen Beschleunigungswert *δf*/δ*t* ₘₐₓ an den jeweiligen Betriebszustand der Kraftwerksanlage anzupassen. Typischerweise führt eine Reduzierung der Ausgangsleistung um 50 % bezogen zur Nominalleistung ebenfalls zu einer 50 %igen Reduzierung des maximalen Beschleunigungswertes *δf*/*δt* ₘₐₓ. Die Anpassung des maximalen Beschleunigungswertes erfolgt vorzugsweise kontinuierlich in Abhängigkeit der tatsächlich erzeugten und in das Versorgungsnetz eingespeisten elektrischen Leistung, indem bspw. eine Strommessung vorgenommen wird.

Ist mit Hilfe des in Rede stehenden Verfahrens ein Lastabwurf detektiert worden, nachdem die vorstehend beschriebenen Kriterien für das Vorliegen eines Lastabwurfes erfüllt sind, so wird ein Signal, im Sinne eines Alarmsignals generiert. Im Bedarfsfall oder nach entsprechend weiterführender Analyse des generierten Signals bzw. der die aktuelle Rotationsgeschwindigkeit sowie das Beschleunigungsverhalten der Rotationsmaschine repräsentierenden Messsignale, erfolgt ein gezielter Eingriff in die Regelung der die Rotationsmaschine antreibenden Antriebskomponenten, bspw. im Falle einer Gasturbinenanlage die Brennstoffzufuhr, um letztlich das Betriebsverhalten der Rotationsmaschine innerhalb der vorgegebenen Betriebsgrenzen zu stabilisieren.

Eine vernünftige und zuverlässige Anwendung des Verfahrens für den Betrieb einer Kraftwerksanlage zur Stromeinspeisung in ein Versorgungsnetz ist vorzugsweise während des normalen Betriebes möglich, d. h. während der Stromeinspeisung in das Versorgungsnetz. Die Gefahr, dass selbst bei Anwendung des erfindungsgemäßen Verfahrens falscher Alarm generiert wird, kann in Fällen nicht vollständig ausgeschlossen werden, in denen sich die Kraftwerksanlage bspw. in einer schnellen Startphase befindet, in der bspw. die Gasturbinenanlage eingeschaltet und auf Nominallast gebracht wird. Insofern ist es vorteilhaft, entsprechende Vorkehrungen zu treffen, durch die eine Signalgenerierung in Betriebssituationen, die nicht dem Normalbetrieb entsprechen, unterdrückt wird.

Eine derartige, nicht dem Normalbetrieb entsprechende Betriebssituation kann überdies auch auftreten, wenn die Kraftwerksanlage eine nur geringe aber kontinuierliche elektrische Leistung in das Versorgungsnetzwerk einspeist. So ist der maximale Beschleunigungswert *δf* /δ*t* ₘₐₓ aufgrund der nur sehr geringen erzeugten und in das Versorgungsnetzwerk abgegebenen elektrischen Leistung ebenfalls sehr klein. In diesem Fall wäre es schwierig, die mögliche Beschleunigung δ*f*/δ*t*ₘₐₓ nach einem Lastabwurf mit der Leistung zuverlässig zu vergleichen und ein Abschaltkriterium zu definieren. Dieses ist aber in diesem Betriebsfall auch eher unkritisch, da der eigentliche Turbinen-Drehzahlregler ein Ausregeln kleiner Laständerungen i.A. beherrscht. Das Alarmsignal kann daher in diesem Fall unterdrückt werden.
Zur Durchführung des vorstehend beschriebenen Verfahrens zum Erfassen eines Lastabwurfes zwischen einer elektrischer Energie erzeugender Rotationsmaschine und einen zur Stromversorgung an die Rotationsmaschine angeschlossenen Netzwerkes, gemäß dem Oberbegriff des Anspruches 1 ist überdies eine Vorrichtung vorgesehen, die eine Messeinheit zum Erfassen einer von der Rotationsgeschwindigkeit der Rotationsmaschine abhängigen ersten Betriebsgröße vorsieht. Darüber hinaus weist die Vorrichtung eine Messeinheit zum Erfassen einer vom Trägheitsmoment der Rotationsmaschine abhängigen zweiten Betriebsgröße auf. Ferner ist darüber hinaus eine Vergleichseinheit zum Vergleichen der ersten Betriebsgröße mit einem ersten Referenzwert sowie zum Vergleichen der zweiten Betriebsgröße mit einem zweiten Referenzwert vorgesehen. Schließlich generiert ein Signalgenerator bei Überschreiten beider Betriebsgrößen jeweils einer vorgebbaren Toleranzgrenze ein Signal, das vorzugsweise als Alarmsignal, bspw. für ein einen Übergang in eine andere Betriebsart, dient. Weitere, die erfindungsgemäße Vorrichtung ausbildende Komponenten und Anordnungen sind im weiteren den Ausführungsbeispielen unter Bezugnahme auf die Figuren zu entnehmen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Komponentendarstellung zur Überwachung der Wechselfrequenz f sowie der Beschleunigung δ*f* /δ*t* ₘₐₓ einer Rotationsmaschine,
- Fig. 2: schematisierte Komponentendarstellung wie Figur 1 mit zusätzlich variabler maximaler Beschleunigungswertvorgabe,
- Fig. 3: erweiterte schematisierte Komponentendarstellung zur Detektion eines Lastabwurfes sowie
- Fig. 4: Diagrammdarstellung eines berechneten Szenarios für einen Lastabwurf mit nachfolgender Stabilisierung.

### Wege zur Ausführung der Erfindung, gewerbliche Verwendbarkeit

Zur industriellen Erzeugung elektrischer Energie werden nahezu ausschließlich auf dem elektrodynamischen Prinzip beruhende Generatoren eingesetzt, die als Rotationsmaschinen ausgebildet sind, in denen typischerweise eine Rotoreinheit drehbar innerhalb einer Statoreinheit gelagert ist. Zum Drehantrieb der Rotoreinheit sind je nach Kraftwerkstyp unterschiedliche Antriebssysteme einsetzbar, wie bspw. eine Dampfturbinenanordnung, eine durch Wasserkraft angetriebene Schaufelradanordnung, eine Gasturbinenanordnung, eine kombinierte Dampf-Gasturbinenanordnung, um nur einige zu nennen.

Zur Erfassung der aktuell an ein Versorgungsnetz abgegebenen elektrischen Leistung ist es grundsätzlich möglich, die in der Rotationsmaschine bzw. in dem Generator innewohnende Rotationsenergie zu ermitteln, bspw. durch Messung der Rotationsgeschwindigkeit des die Rotationsmaschine durchsetzenden Rotationsschaftes. Hierfür geeignete Messsensoren sind hinlänglich bekannt und markteingeführt. Anstelle der Messung der Rotationsgeschwindigkeit v eignete sich in äquivalenter Weise ebenso die Erfassung der Wechselfrequenz f der durch die Rotationsmaschine/Generator erzeugte elektrischen Spannung, die letztlich zur Stromversorgung an ein Versorgungsnetz angelegt wird. Auch hierfür geeignete Messeinheiten, die die Wechselfrequenz f der elektrischen Spannung erfassen, sind hinlänglich bekannt und markteingeführt.

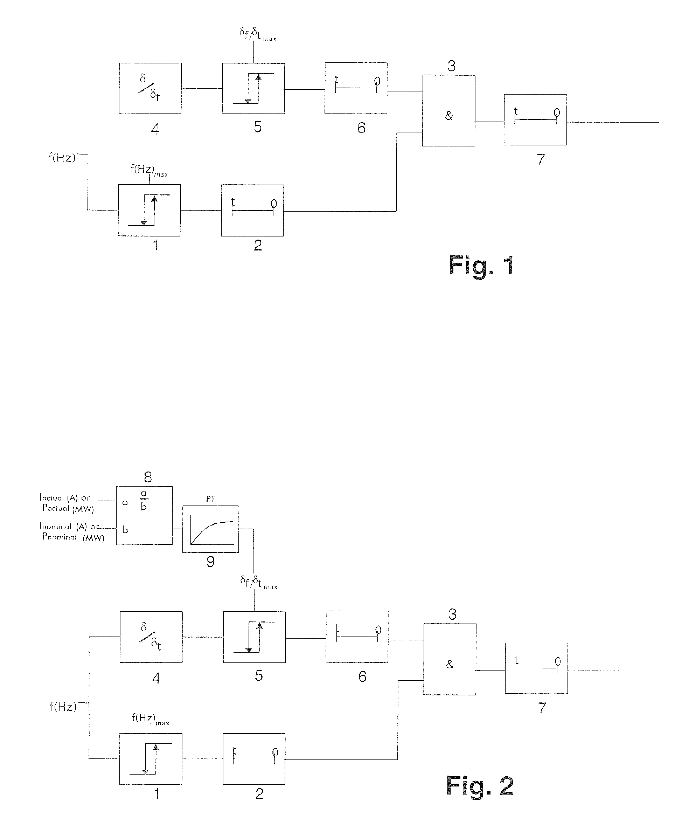

Auf der Grundlage einer derartigen Wechselfrequenzmessung basiert die in Figur 1 schematisch dargestellte Komponentenanordnung zur zuverlässigen Erfassung eines Lastabwurfes zwischen einer Rotationsmaschine, deren Wechselfrequenz f als Eingangsgröße an der linken Seite der Schaltungsanordnung anliegt, und einem Versorgungsnetz, das sich rechts an die in Figur 1 dargestellte Schaltungsanordnung anschließt.

Ausgehend von der erfassten Wechselfrequenz f basiert eine simultane Auswertung dieser Eingangsgröße simultan längs zweier getrennter Auswertezweige. So ist längs eines ersten Auswertezweiges eine Vergleichseinheit 1 vorgesehen, die die aktuell erfasste Wechselfrequenz f mit einem fest vorgegebenen Maximalwert fₘₐₓ vergleicht. Die Vergleichseinheit 1 ist als ein logisches Schaltelement ausgebildet und erzeugt ein binäres Vergleichsergebnis ("0" oder "1 "), das im weiteren einer Schaltereinheit 2 zugeführt wird. Bei der Schaltereinheit 2 handelt es sich um eine Einschaltverzögerung, die temporäre Störungen und somit Fehlalarme unterdrückt. Die Verzögerungszeit wird so gewählt, dass Störungen zwar vermieden werden, eine Signalgenerierung im Falle eines Lastabwurfes dagegen noch rechtzeitig erfolgen kann.

Schließlich ist die Schaltereinheit 2 mit einem logischen Und-Gatter 3 verknüpft, an das zugleich auch ein binäres Vergleichsergebnis aus dem anderen Auswertezweig, wie nachfolgend beschrieben, anliegt.

Der zweite Auswertezweig sieht einen Differenzierer 4 vor, der die Wechselfrequenz f nach der Zeit differenziert, um die zeitliche Veränderung der Wechselfrequenz f zu erhalten, die einer Vergleichseinheit 5 zugeführt wird, in der die aktuelle zeitliche Veränderung der Wechselfrequenz f mit einem Referenzwert, dem sog. maximalen Beschleunigungswert *δf* /δ*t* ₘₐₓ verglichen wird. Je nach Vergleichsergebnis wird auch im Falle der Überwachungseinheit 5 ein binäres Vergleichsergebnis generiert, das, gleichsam dem vorstehend beschriebenen Auswertezweig einer Schaltereinheit 6 zugeführt wird. Auch bei der Schaltereinheit 6 handelt es sich um eine Einschaltverzögerung, deren Zeitkonstante so gewählt wird, dass zwischen Störung und einem realen Lastabwurf klar differenziert werden kann.

Im Falle einer in Betrieb befindlichen Rotationsmaschine gelangen somit durch die in Figur 1 dargestellten Komponenten zwei binäre Vergleichsergebnisse an das Und-Gatter 3, dem nachfolgend gegebenenfalls, zwecks Störungsunterdrückung, eine weitere Einschaltverzögerung in Form von Überwachungseinheit 7 nachgeordnet werden kann.
Der in Figur 1 dargestellte Schaltungsaufbau macht deutlich, dass die Detektion eines Lastabwurfes ausschließlich durch die gleichzeitige Erfüllung zweier Kriterien gegeben ist:
1. die erfasste Wechselfrequenz f übersteigt die maximal vorgegebene Maximalfrequenz fₘₐₓ, und
2. die zeitliche Änderung der Wechselfrequenz δ*f* /δ*t* übersteigt den vorgegebenen maximalen Beschleunigungswert δ*f*/δ*t* ₘₐₓ.

Sollte eines der Kriterien, die zu einem Lastabwurf führen würden, nicht erfüllt sein, so aktiviert die in Figur 1 angegebene Schaltung aufgrund der Und-Verknüpfung durch das Und-Gatter 3 kein Signal, das einen Lastabwurf indizieren würde.

In Figur 2 ist eine erweiterte Schaltungsvariante dargestellt, die sich gegenüber der in Figur 1 beschriebenen Schaltungsvariante durch die Möglichkeit einer variablen Berechnung des maximalen Beschleunigungswertes δ*f* /δ*t* ₘₐₓ unterscheidet. So ändert sich das Beschleunigungsverhalten einer Rotationsmaschine im Falle eines abrupten Lastabwurfes in Abhängigkeit der Rotationsenergie, die die Rotationsmaschine vor Lastabwurf aufweist. Im Falle einer durch eine Gasturbinenanlage angetriebenen Rotationsmaschine hat sich gezeigt, dass die Rotationsmaschine unter Vollast bei Lastabwurf zwischen 3 und 4 Hz/sec. beschleunigt. Befindet sich die Rotationsmaschine bzw. die Gasturbine unter Teillastbedingungen, bspw. unter Halblastbedingungen, so zeigt sich, dass das Beschleunigungsverhalten der Rotationsmaschine bei Lastabwurf lediglich 1,5-2 Hz/sec. beträgt. Diesem Umstand wird in der Schaltungsanordnung gemäß Figur 2 dadurch Rechnung getragen, dass mit Hilfe einer Mess- und Auswerteeinheit 8 der aktuelle Strom I_{actual} oder die aktuell abgegebene elektrische Leistung P_{actual} gemessen wird und ins Verhältnis zu jeweiligen Referenzwerten Iₙₒₘᵢₙₐₗ oder Pₙₒₘᵢₙₐₗ gesetzt werden, die die Rotationsmaschine unter Volllastbedingungen erzeugt. Das hierdurch gewonnene Verhältnis wird anhand eines Glättungsfilters 9 mit einer vorgebbaren Zeitkonstante zeitlich gemittelt, der als Ergebniswert einen vom aktuellen Betriebsverhalten der Rotationsmaschine abhängigen maximalen Beschleunigungswert *δf* /*δt* ₘₐₓ erzeugt. Die Zeitkonstante des Glättungsfilters 9 ist so groß bemessen, dass auch bei plötzlichem Wegfall des Signals am Eingang des Glättungsfilters im Falle eines Lastabwurfes das Ausgangssignal noch für eine genügende Zeit ansteht. Die übrigen Komponenten 1 - 7 sind mit jenen in Figur 1 identisch und bedürfen, um Wiederholungen zu vermeiden, keiner weiteren Erwähnung.

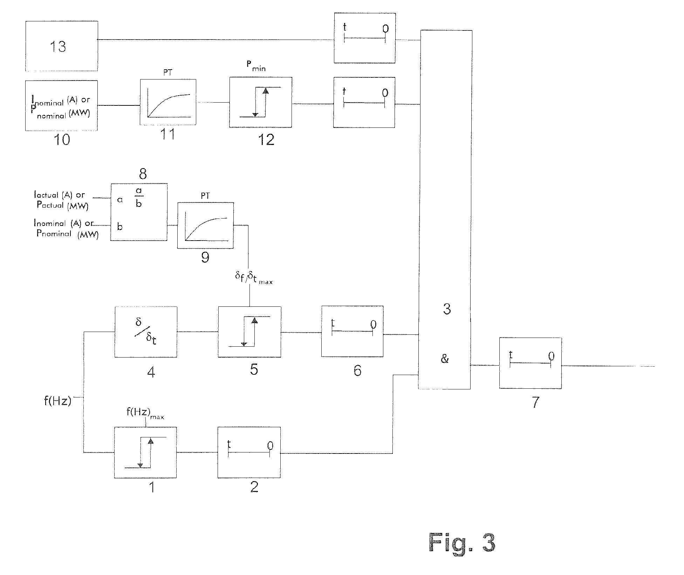

In Figur 3 ist ein weiterer Schaltungsaufbau dargestellt, der jenem in Figur 2 gleicht, jedoch über eine weitere vorteilhafte Ergänzung verfügt. Wie eingangs erwähnt, ist eine zuverlässige Überwachung hinsichtlich des Auftretens eines Lastabwurfes beim Betrieb einer elektrische Energie erzeugenden Rotationsmaschine lediglich während der Erzeugung einer elektrischen Mindestleistung sinnvoll möglich. Hierzu wird der aktuell an das Versorgungsnetz abgegebene Strom |_{actual} oder die aktuell an das Versorgungsnetz abgegebene elektrische Leistung P_{actual} mit Hilfe einer Messeinheit 10 erfasst. Die hierdurch gewonnenen Daten gelangen an ein Glättungsfilter 11, dessen Zeitkonstante so groß bemessen ist, dass auch bei plötzlichem Wegfall des Signals am Eingang des Glättungsfilters im Falle eines Lastabwurfes das Ausgangssignal noch für eine genügende Zeit ansteht. Das Ausgangssignal des Glättungsfilters 11 gelangt dann an eine Vergleichseinheit 12, die die Daten mit jeweils einem unteren Schwellwert vergleicht und bei Überschreiten des Schwellwertes Pₘᵢₙ den normalen Betriebszustand anzeigt. Bereits in dieser Ausbaustufe der in Figur 3 dargestellten Schaltung würde demzufolge ein Lastabwurf vorliegen, sofern der aktuell gemessene Strom bzw. die aktuell gemessene Leistung den Schwellwert P ₘᵢₙ übersteigt und somit ein normales Betriebsverhalten anzeigt, der maximale Beschleunigungswert δf /*δt* ₘₐₓ überschritten wird und zudem die Wechselfrequenz f die maximale Wechselfrequenz fₘₐₓ übersteigt.

Zusätzlich sieht das Schaltungskonzept gemäß Figur 3 eine weitere Überwachungseinheit 13 vor, die angibt, ob die Rotationsmaschine mit dem Versorgungsnetz tatsächlich verbunden ist. Sollte die Rotationsmaschine vom Versorgungsnetz getrennt sein, so wird der binäre Ergebniswert "0" erzeugt, der neben allen übrigen binären Ergebniswerten ebenso am Und-Gatter 3 anliegt und dadurch die Detektion eines Lastabwurfes verhindert. Ein Lastabwurf ist im Rahmen der in Figur 3 dargestellten Schaltungsanordnung ausschließlich im Falle detektierbar, in dem alle binären Ergebniswerte, die an das Und-Gatter 3 geführt werden, den Wert "1" annehmen.

Sollte sich die Rotationsmaschine außer Betrieb oder in einem nicht regulären Betriebszustand befinden, so sorgt die Überwachungseinheit 13 für die Vermeidung eines falschen Alarm, sollten alle übrigen Kriterien das Vorliegen eines Lastabwurfes anzeigen.

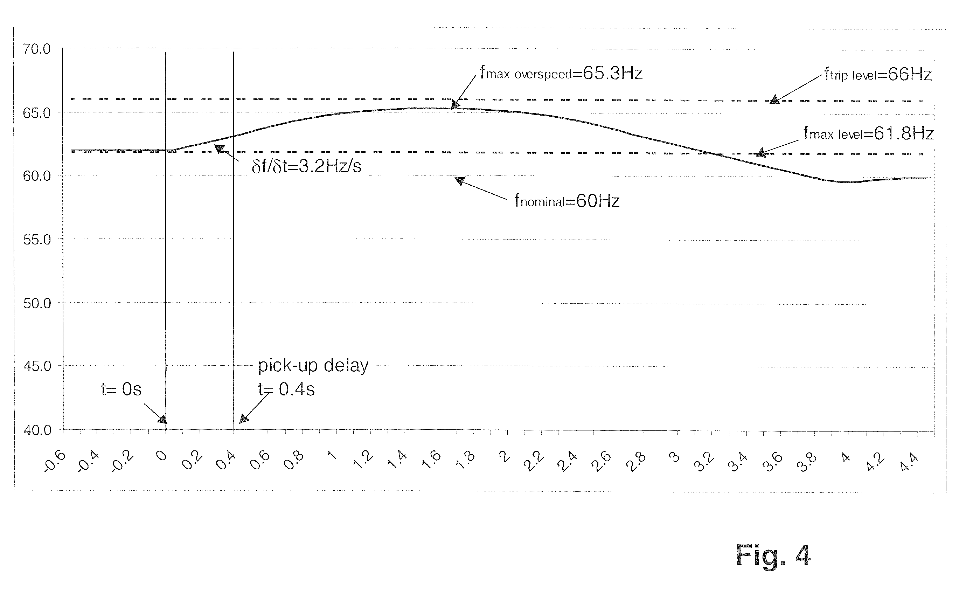

Figur 4 zeigt ein Szenario für einen berechneten Lastabwurf in Diagrammdarstellung. Die Abszisse entspricht der Zeitachse in Sekundeneinheiten, längs der Ordinate ist die Wechselfrequenz f angetragen. Es sei angenommen, dass eine Gasturbinenanlage einen Generator mit einer Nennfrequenz von 60 Hz antreibt. Im dargestellten Fall überschreitet die Rotationsmaschine zum Zeitpunkt t = 0s die maximale Wechselfrequenz fₘₐₓ = 61,8 Hz, so dass ein erstes Kriterium für einen Lastabwurf erfüllt ist. Zur tatsächlichen Erkennung des Lastabwurfes gilt es erfindungsgemäß jedoch das Beschleunigungsverhalten der Rotationsmaschine zu erfassen und festzustellen, ob der Generator mit einem den für einen Lastabwurf charakteristischen Beschleunigungswert übersteigenden Beschleunigungsvorgang beschleunigt wird.

Ferner sei vorausgesetzt, dass der maximale Beschleunigungswert bei 3,2 Hz/sec. erreicht ist. Die Ermittlung dieses Wertes ergibt sich innerhalb der ersten 0,4 sec. nach Überschreiten von fₘₐₓ, so dass nach einer Zeitverzögerung von t = 0,4 sec. alle Kriterien für einen vorhandenen Lastabwurf erfasst und erfüllt sind und ein entsprechendes Alarmsignal generiert wird, das Regelungsmaßnahmen an der Gasturbinenanlage auslöst, durch die die Gasturbine entsprechend in ihrer Leistung gedrosselt wird. Trotz eingeleiteter Regelungsmaßnahmen setzt sich der Anstieg der Wechselfrequenz f auf einen maximalen Frequenzwert von 65,3 Hz fort, der in etwa 1,2 - 1,6 sec. nach Erkennen des Lastabwurfes erreicht wird. Durch die aktivierten Regelungsmaßnahmen an der Gasturbine wird jedoch eine maximal zulässige Betriebsfrequenz von 66 Hz nicht erreicht, die als oberste Sicherheitstoleranzgrenze dient und bei Überschreiten unweigerlich zu einem Notaus der gesamten Gasturbinenanlage führt. Etwa nach 4,5 sec. nach Erkennen des Lastabwurfes wird die Gasturbinenanlage und der damit verbundene Generator auf eine Nominalfrequenz von 60 Hz stabilisiert.

### Bezugszeichenliste

- 1: Vergleichseinheit
- 2: Schaltereinheit/Einschaltverzögerung
- 3: Und-Gatter
- 4: Differenzierer
- 5: Vergleichseinheit
- 6: Schaltereinheit/Einschaltverzögerung
- 7: Schaltereinheit /Einschaltverzögerung
- 8: Mess- und Auswerteeinheit
- 9: Glättungseinheit
- 10: Messeinheit
- 11: Glättungseinheit
- 12: Vergleichseinheit
- 13: Überwachungseinheit

## Patentansprüche

1. Verfahren zum Erfassen eines Lastabwurfes zwischen einer elektrische Energie erzeugenden Rotationsmaschine und einem zur Stromversorgung an die Rotationsmaschine angeschlossenen Netzwerkes, an das die Rotationsmaschine in Abhängigkeit ihrer Rotationsgeschwindigkeit eine Wechselfrequenz beaufschlagte elektrische Spannung abgibt,
**gekennzeichnet durch** folgende Verfahrensschritte:
- Erfassen einer von der Rotationsgeschwindigkeit der Rotationsmaschine abhängigen ersten Betriebsgröße,
- Erfassen einer vom Trägheitsmoment der Rotationsmaschine abhängigen zweiten Betriebsgröße und
- Vergleichen der ersten Betriebsgrößen mit einem ersten Referenzwert sowie Vergleichen der zweiten Betriebsgröße mit einem zweiten Referenzwert und bei Überschreiten beider Betriebsgrößen jeweils einer vorgebbaren Toleranzgrenze erfolgt ein Generieren eines Signals.

2. Verfahren nach Anspruch 1,
**dadurch gekennzeichnet, dass** als erste Betriebsgröße die Wechselfrequenz f der durch die Rotationsmaschine erzeugte Wechselspannung verwendet wird.

3. Verfahren nach Anspruch 1 oder 2,
**dadurch gekennzeichnet, dass** als erste Betriebsgröße die
Rotationsgeschwindigkeit, die sensoriell erfasst wird, verwendet wird.

4. Verfahren nach einem der Ansprüche 1 bis 3,
**dadurch gekennzeichnet, dass** als zweite Betriebsgröße ein Beschleunigungswert δ*f* /*δt* der Rotationsmaschine erfasst wird, der die zeitliche Veränderung der Wechselfrequenz f der elektrischen Spannung und damit die zeitliche Veränderung der Rotationsgeschwindigkeit v der Rotationsmaschine darstellt.

5. Verfahren nach einem der Ansprüche 1 bis 4,
**dadurch gekennzeichnet, dass** als erster Referenzwert ein durch die Rotationsmaschine vorgegebener Maximalwert fₘₐₓ für eine maximale Wechselfrequenz oder vₘₐₓ für eine maximale Rotationsgeschwindigkeit verwendet wird.

6. Verfahren nach einem der Ansprüche 1 bis 5,
**dadurch gekennzeichnet, dass** als zweiter Referenzwert ein maximaler Beschleunigungswert *δf* /*δt* ₘₐₓ verwendet wird, der sich ergibt im Falle eines Zustandes der Rotationsmaschine nach Lastabwurf, in dem die Rotationsmaschine durch ihre thermisch und/oder mechanische Leistungsabgabe beschleunigt wird.

7. Verfahren nach Anspruch 6,
**dadurch gekennzeichnet, dass** der maximale Beschleunigungswert *δf* /δ*t* ₘₐₓ in Abhängigkeit von der von der Rotationsmaschine bis zum Zeitpunkt des Lastabwurfes erzeugten elektrischen Energie ermittelt wird.

8. Verfahren nach einem der Ansprüche 1 bis 7,
**dadurch gekennzeichnet, dass** das Generieren des Signals in Fällen unterdrückt wird, in denen sich die Rotationsmaschine in einem Betriebsmode befindet, der sich von einem sich durch Qualitätsmerkmale auszeichnenden Normalmode unterscheidet.

9. Verfahren nach Anspruch 8,
**dadurch gekennzeichnet, dass** ein Qualitätsmerkmal eine minimale zu erzeugende elektrische Energie ist, sollte dieses Qualitätsmerkmal nicht erfüllt sein, so wird kein Signal generiert.

10. Verfahren nach einem der Ansprüche 1 bis 9,
**dadurch gekennzeichnet, dass** das Signal zur gesteuerten Reduzierung der durch die Rotationsmaschine erzeugten elektrischen Energie verwendet wird.

11. Verfahren nach einem der Ansprüche 1 bis 10,
**dadurch gekennzeichnet, dass** die Rotationsmaschine Teil einer Gasturbinenanlage zur Stromerzeugung ist.

12. Vorrichtung zum Erfassen eines Lastabwurfes zwischen einer elektrische Energie erzeugenden Rotationsmaschine und einem zur Stromversorgung an die Rotationsmaschine angeschlossenen Netzwerkes, an das die Rotationsmaschine in Abhängigkeit ihrer Rotationsgeschwindigkeit eine Wechselfrequenz beaufschlagte elektrische Spannung abgibt,
**dadurch gekennzeichnet, dass** eine Messeinheit zur Erfassung einer von der Rotationsgeschwindigkeit der Rotationsmaschine abhängigen ersten Betriebsgröße vorgesehen ist,
dass eine Messeinheit zur Erfassung einer vom Trägheitsmoment der Rotationsmaschine abhängigen zweiten Betriebsgröße vorgesehen ist und
dass eine Vergleichseinheit zum Vergleichen der ersten Betriebsgröße mit einem ersten Referenzwert sowie zum Vergleichen der zweiten Betriebsgröße mit einem zweiten Referenzwert, und
dass ein Signalgenerator vorgesehen ist, der bei Überschreiten beider Betriebsgrößen jeweils einer vorgebbaren Toleranzgrenze ein Signals generiert.
